# EUROPÄISCHE PATENTSCHRIFT

(11) **EP 3 068 264 B1**
(45) Veröffentlichungstag und Bekanntmachung des Hinweises auf die Patenterteilung: **03.10.2018**
(21) Anmeldenummer: 13814492.8
(22) Anmeldetag: 13.12.2013
(51) Int. Cl.: A47B 9/10, A47C 3/30, F16F 9/512

(54) **SICHERHEITSBREMSE FÜR TELESKOPIERBARE MÖBELSÄULE**
SAFETY BRAKE FOR TELESCOPIC FURNITURE POST
FREIN DE SÉCURITÉ POUR COLONNE DE MEUBLE TÉLESCOPIQUE

(43) Veröffentlichungstag der Anmeldung: 21.09.2016
(73) Patentinhaber: Kesseböhmer Produktions GmbH & Co. KG, 73235 Weilheim/Teck (DE)
(72) Erfinder: HANSEN, Melf, 75053 Gondelsheim (DE)
(74) Vertreter: Prüfer & Partner mbB Patentanwälte · Rechtsanwälte
(86) Internationale Anmeldenummer: PCT/EP2013/076583
(87) Internationale Veröffentlichungsnummer: WO 2015/086093

(56) Entgegenhaltungen:
- WO-A1-2006/029421
- DE-A1- 2 001 465
- DE-A1-102006 013 366
- DE-A1-102010 031 144
- FR-A- 1 419 551
- US-A- 2 911 072
- US-A- 6 026 755

## Beschreibung

Die vorliegende Erfindung betrifft höhenverstellbare Säulen für Möbel, insbesondere für Tische. Eine optimierte Höhenverstellung eines Bürotisches beispielsweise gehört für den Hersteller zu den grundlegenden Anforderungen, um dem Benutzer ein ergonomisches Arbeiten zu ermöglichen. Dabei werden Tischbeine vorgesehen, die es erlauben, die Tischhöhe individuell anzupassen.

Die höhenverstellbaren Tischbeine sind bekanntermaßen aus einer mehrteiligen, beispielsweise aus einer drei- oder zweiteiligen Säule gefertigt, wobei letztere aus einer Innensäule und einer Außensäule bestehen, die teleskopierbar ausgebildet sind und so ineinandergeschoben bzw. auseinandergezogen werden können. Die Außensäule kann dabei fest mit einem Unterbau verbunden sein und bildet eine statische Einheit. Die Innensäule kann mit der Tischplatte verbunden sein und bildet dadurch einen bewegbaren Anteil des Möbels. Häufig sind innerhalb der teleskopierbaren Säule elektromotorische Antriebe angeordnet.

Es kommen jedoch auch immer häufiger Tische zum Einsatz, deren Höhenverstellung mittels einer Gasdruckfeder erfolgt, die in einem oder mehreren Tischbein(en) vorgesehen ist (sind). Dabei werden beispielsweise der Kolben der Gasdruckfeder mit der statischen Einheit der Möbelsäule und die Kolbenstange der Gasdruckfeder mit dem bewegbaren Anteil, wie beispielsweise der Tischplatte oder der Innensäule, verbunden.

Aus dem Stand der Technik nach EP 1 987 734 B1 ist ein Tisch bekannt, der mithilfe einer Gasdruckfeder in der Höhe verstellt werden kann. Der dort beschriebene Tisch, bei welchem beispielhaft zwei Möbelsäulen vorgesehen sind, weist eine geeignete Synchronisierungsvorrichtung auf, sodass eine gleichmäßige Höhenverstellung des gesamten Tisches auch dann gewährleistet ist, wenn nur eine Gasdruckfeder in lediglich einer der Säulen vorgesehen ist.

Ein höhenverstellbarer Tisch mit mindestens einer Gasdruckfeder hat im Vergleich zu motorbetriebenen verstellbaren Tischen den Vorteil, dass die Höhenverstellung in deutlich kürzerer Zeit erfolgen kann. Zudem muss ein solcher Tisch nicht mit einem Stromanschluss verbunden sein, was nicht nur Kosten spart, sondern sich auch durch den Verzicht auf jegliche Kabel positiv auf das Design des Tisches auswirkt.

Vor der eigentlichen Höhenverstellung der Möbelsäule wird oftmals ein Sicherungsmittel in Form eines Hebels oder Tasters betätigt. Solche Sicherungsmittel verhindern, dass ein zu hohes oder zu niedriges Gewicht, das auf der Tischplatte lastet, oder das Auflegen oder Herunternehmen von schweren Gegenständen auf das oder von dem Möbel während der Höhenverstellung zu einem unerwünschten plötzlichen Herab- oder Herauffahren der Möbelsäule führt. Da die genannten höhenverstellbaren Möbel, insbesondere Tische, mitunter hohe Lasten tragen müssen, kann es jedoch passieren, dass es auch bei dem Entsichern selbst zu einem plötzlichen Herunterschnellen des bewegbaren Anteils des höhenverstellbaren Tisches kommt, was zu Beschädigungen am Tisch oder der darauf abgeladenen Gegenstände und vor allem zu Verletzungen des Benutzers führen kann.

Bei Tischen mit einer Gasdruckfeder werden letztere im Stand der Technik normalerweise auf ein bestimmtes zulässiges Gewicht eingestellt, bei dessen Über- oder Unterschreiten es trotz Betätigung der Sicherungsvorrichtung zu keiner Höhenverstellung kommen kann. Vorteilhafterweise kann dieses Gewicht mittels eines zusätzlichen Gasspeichers, der ebenfalls an dem Möbel selbst angeordnet sein kann, je nach Wusch des Verbrauchers festgelegt werden.

Es sind zudem Vorrichtungen bekannt, die vorsehen, dass der Betätigungshebel über ein Seilzugsystem mit einem Rastmechanismus verbunden ist, durch welchen die Synchronisierungsmittel verlaufen. Der Rastmechanismus misst dabei die an den Synchronisierungsmitteln anliegenden Zugkräfte und gibt eine Höhenverstellung erst frei, wenn sich die Kräfte im Gleichgewicht befinden.

Nachteilig an solchen Systemen ist es jedoch, dass diese Art der Sicherung durch den Benutzer überwunden werden kann, wenn er beispielsweise am bewegbaren Anteil rüttelt oder sein Eigengewicht auf die Tischplatte aufbringt. Ist das Sicherungssystem so erstmal umgangen, kann eine plötzliche Auf- oder Abbewegung des bewegbaren Anteils erfolgen, was wiederum ein großes Verletzungspotential birgt.

Des Weiteren ist aus dem Stand der Technik eine Vorrichtung zum Ausgleichen einer auf eine Tischplatte wirkende Gewichtskraft bekannt, wie in US 6 026 755 A offenbart.

Darüber hinaus ist aus DE 10 2010 031 144 A1 ein Schwingungsdämpfer bekannt.

Außerdem ist aus WO 2006/029421 A ein Fluiddämpfer bekannt.

Des Weiteren ist aus US 2 911 072 A ein hydraulischer Stoßdämpfer bekannt.

Darüber hinaus ist aus DE 20 01 465 A1 ein zweiseitig durchströmbares Ventil zum Erzeugen verschiedener Durchflusswiderstände bekannt.

Des Weiteren ist aus FR 1 419 551 A ein hydraulischer Dämpfer bekannt.

Es ist daher Aufgabe der vorliegenden Erfindung, höhenverstellbare Möbelsäulen für Schreibtische mit einer Gasdruckfeder zu schaffen, bei denen die oben genannten Gefahren durch eine geeignete, kostengünstig herstellbare Bremsvorrichtung verhindert wird, wodurch insbesondere auch bei einem unbeabsichtigten Entsichern eine unkontrollierte Bewegung des bewegbaren Anteils des Möbels verhindert werden kann.

Diese Aufgabe wird mit den Merkmalen der nebengeordneten Patentansprüche gelöst. Vorteilhafte Weiterbildungen der Erfindung sind Gegenstand der Unteransprüche.

Die erfindungsgemäße Bremsvorrichtung besteht im Wesentlichen aus einer Gasdruckfeder, die eine Drosseleinrichtung aufweist. Dadurch wird gewährleistet, dass die Höhenverstellung selbst in einem nicht gesicherten Zustand niemals eine Maximalgeschwindigkeit überschreitet, wodurch ein unkontrollierbares Herauf- oder Herabschnellen des bewegbaren Anteils des Tisches vermieden wird.
Dabei kann eine allgemein bekannte Gasdruckfeder angewandt werden, bei welcher die Drosselung durch Regulierung der Fluidpassage innerhalb des Gasdruckzylinders erfolgt.
Die Erfindung soll im Folgenden anhand der in den Zeichnungen dargestellten Ausführungsbeispiele näher erläutert werden. Es zeigen:
Fig. 1 eine Querschnittsansicht einer ersten nicht zur Erfindung gehörenden Bremsvorrichtung,
Fig. 2 eine Querschnittsansicht einer zweiten nicht zur Erfindung gehörenden Bremsvorrichtung
Fig. 3 eine Querschnittsansicht einer ersten Ausführungsform der Erfindung,
Fig. 4 eine Querschnittsansicht einer zweiten Ausführungsform der Erfindung.

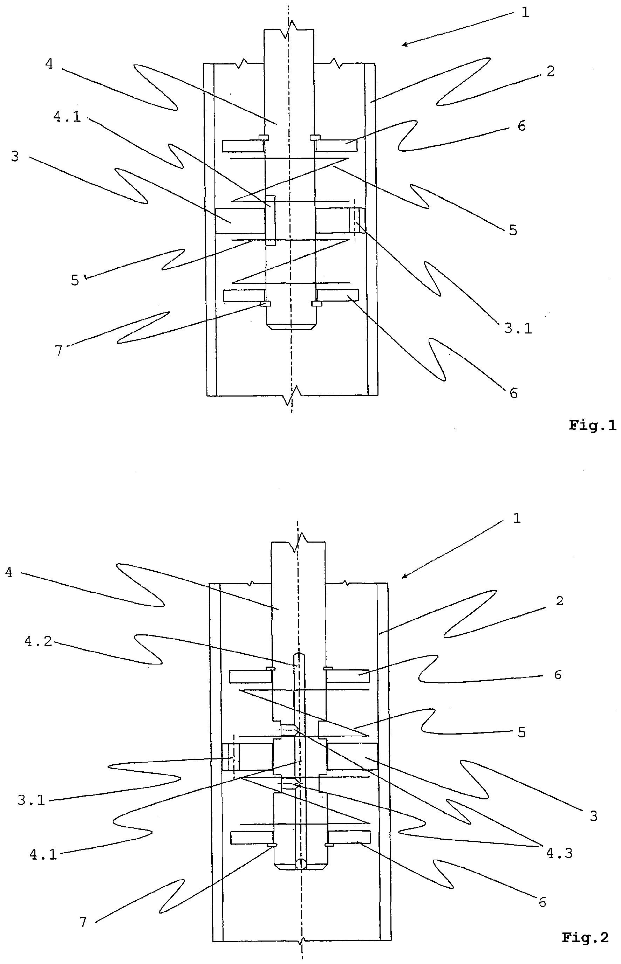

Fig. 1 zeigt einen Teilbereich einer Gasdruckfeder mit einer Sicherheitsbremse, wobei diese Bremsvorrichtung innerhalb einer Gasdruckfeder vorgesehen ist. Die Gasdruckfeder 1 weist dabei wie üblich einen Zylinder 2, einen Kolben 3 und eine Kolbenstange 4 auf und ist auf einen gewünschten Gewichtsbereich eingestellt.

Der Kolben 3 ist relativ zur Kolbenstange 4 und zum Zylinder 2 bewegbar und weist ferner eine Düse auf, die als ein erster Fluidkanal 3.1 dient. Ferner wird der Kolben 3 durch zwei Federn 5 und 5' in einer vorbestimmten Position (Normalposition) gehalten, wenn der Gasdruckzylinder sich in einem Ruhezustand befindet oder innerhalb des eingestellten Gewichtsbereichs in Betrieb genommen wird (Normalzustand). Es ist aber nicht zwingend erforderlich, dass der erste Fluidkanal 3.1 als eine Düse in dem Kolben 3 selbst ausgebildet ist. Vielmehr ist es nur notwendig, dass eine Kolbenoberseite und eine Kolbenunterseite fluidisch miteinander verbunden sind, was auch verwirklich werden kann, indem der Kolben 3 eine Aussparung entlang seines Umfangs aufweist, oder der Durchmesser des Kolbens 3 insgesamt um ein vorbestimmtes Maß kleiner ist, als der Durchmesser des Zylinders 2.

Die Federn 5 und 5' werden jeweils durch zwei baugleiche Scheibenelemente 6 abgestützt, welche wiederum jeweils durch Sperrringe 7, die in in der Kolbenstange 4 vorgesehenen Nuten eingepasst sind, gehalten werden.

Die Kolbenstange 4 ist mit einer Ausfräsung 4.1 versehen, die neben der Düse 3.1 des Kolbens 3 als ein zweiter Fluidkanal fungiert. Während des normalen Betriebs des Gasdruckzylinders 1 innerhalb des eingestellten Gewichtsbereiches kann das Fluid so durch beide Kanäle 3.1 und 4.1 passieren, wodurch sich die Drücke auf beiden Seiten des Kolbens 3 im Gleichgewicht befinden.

In einem Fall, in welchem beispielsweise ein höheres als das voreingestellte Gewicht auf der Tischplatte lastet, wird die Kolbenstange 4 durch die Gewichtskraft heruntergedrückt und erfährt eine Beschleunigung. Wird bei diesem Vorgang eine vorbestimmte Geschwindigkeit erreicht, kann ein Druckausgleich innerhalb der Gasdruckfeder nicht wie gewöhnlich erfolgen, und es entsteht - in diesem Fallbeispiel - eine Druckerhöhung auf der Kolbenunterseite. Diese Druckerhöhung bewirkt eine Verstellung des zweiten Fluidkanals 4.1 relativ zum Kolben 3 und entgegen der Druckkraft der Feder, und die Kolbenstange 4 wird so weit verschoben, bis der Fluidkanal 4.1 vollständig verschlossen wird. Dies wiederum bewirkt, das der Fluiddurchfluss nur noch über die Düse 3.1 erfolgen kann, wodurch das gesamte System innerhalb der Gasdruckzylinders durch den entstehenden Überdruck auf der unteren Kolbenseite gedämpft und die Geschwindigkeit gebremst wird. Ein Herunterschnellen des bewegbaren Anteils wird somit effektiv verhindert.
Wird die Höhenverstellung unterbrochen oder der Tisch wieder entlastet, bewirkt die Feder 5 eine relative Rückverschiebung der Position des zweiten Fluidkanals 4.1 zur Position des Kolbens (Normalposition), wodurch der Fluidkanal 4.1 wieder geöffnet wird.
In einem Fall, in dem das Tischgewicht vor der Verstellung beispielsweise durch das Herunternehmen eines auf der Tischplatte befindlichen schweren Gegenstandes entlastet und dadurch das voreingestellte Gewicht unterschritten wird, wirkt das System ebenso in die entgegengesetzte Richtung, wodurch auch ein Heraufschnellen der Tischplatte unterbunden werden kann.

Die Figur 2 zeigt eine weitere Sicherheitsbremse, wobei der zweite Fluidkanal 4.1 hierbei durch eine vertikale Bohrung 4.2 entlang der Mittelachse der Kolbenstange und zwei horizontale Bohrungen 4.3 gebildet sind, welche ober- und unterhalb der Kolbens 3 angeordnet sind, wenn der Kolben 3 sich in der vorbestimmten Position im Normalzustand der Gasdruckfeder befindet.

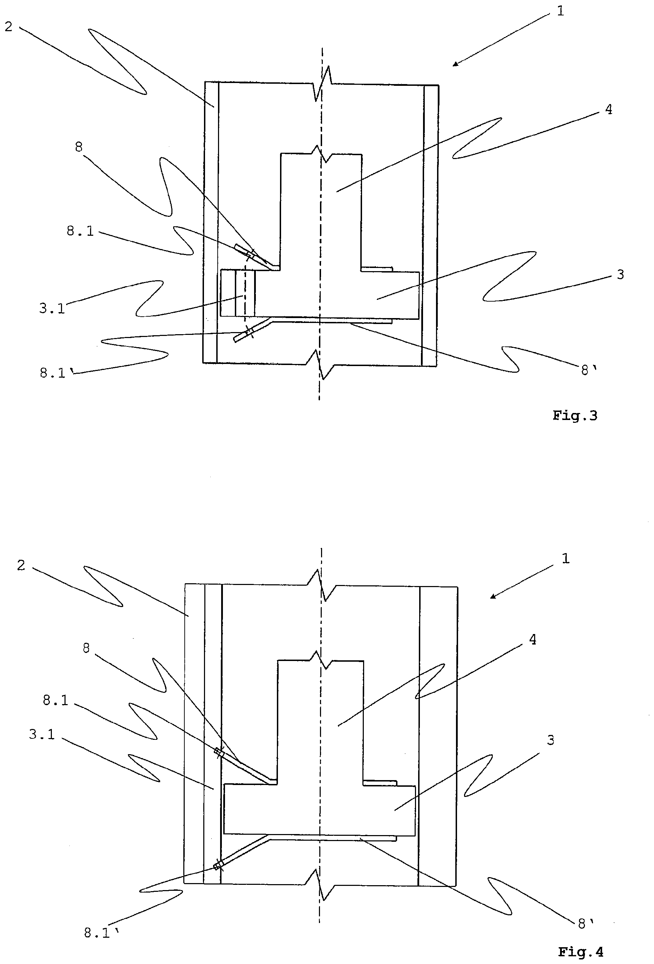

Figur 3 zeigt ein erstes Ausführungsbeispiel einer erfindungsgemäßen Sicherheitsbremse, wobei in diesem Fall der zweite Fluidkanal nicht an der Kolbenstange 4 selbst ausgebildet ist. Ferner ist die Kolbenstange 4 fest mit dem Kolben 3 verbunden.
In dieser Ausführungsform der erfindungsgemäßen Sicherheitsbremse ist der Kolben mit zwei Federelementen 8 und 8' vorgesehen, die jeweils auf einer Kolbenoberseite und einer Kolbenunterseite angeordnet sind.
In einem Normalzustand der Gasdruckfeder stehen die Federelemente 8 und 8' in einem Bereich ober- und unterhalb der Düse 3.1 vom Kolben 3 weg, wie in Figur 3 gezeigt ist.
In diesem Bereich der Düse 3.1 weist jedes der Federelemente 8 und 8' Öffnungen 8.1 und 8.1' auf, die im Durchmesser kleiner sind, als die Düse 3.1 selbst.
Es ist ebenso möglich, den Zylinder 2 mit einer Nut und im Gegenzug den Kolben 3 ohne Düse vorzusehen, wie es in der Ausführungsform gemäß Figur 4 gezeigt ist, wodurch in diesem Fall der erste Fluidkanal 3.1 durch die Nut gebildet wird. Die Federelemente 8 und 8' sind in dieser Ausführungsform so dimensioniert, dass sie in die Nut 3.1 hineinragen.
Ist der Tisch wie im oben beschriebenen Beispiel für die erste Ausführungsform während der Höhenverstellung wieder mit einem zu hohen Gewicht belastet, kommt es wieder zu einer lokalen Druckerhöhung auf der Kolbenunterseite, wodurch das untere Federelement 8' zum Kolben 3 hin gedrückt wird und sich ein neuer Fluidkanal 8.1 mit einem im Vergleich zum ersten Fluidkanal 3.1 verminderten Durchmesser, nämlich mit einem Durchmesser, der dem Durchmesser der Öffnung 8.1' entspricht, bildet.

Das Fluid kann auch in diesem Fall nur noch verlangsamt durch den zweiten Fluidkanal 8.1 passieren, wodurch das Gesamtsystem der Gasdruckfeder gedämpft und die Bewegung der Höhenverstellung gebremst wird.

Analog zum oben beschriebenen Beispiel für die erste Ausführungsform bezüglich der Entlastung des Tischgewichtes während der Verstellung, verhält es sich auch bei den Ausführungsbeispielen gemäß den Figuren 3 und 4, wobei bei der Entlastung des Gewichts eine Druckerhöhung auf der Kolbenoberseite das obere Federelement 8 zum Kolben 3 hin drückt und der verminderte Querschnitt des zweiten Fluidkanals 8.1, 8.1' auch hier eine Bremswirkung mit sich bringt.

## Patentansprüche

1. Bremsvorrichtung für eine höhenverstellbare Möbelsäule, wobei die Bremsvorrichtung aufweist:
- einen Kolben (3), der innerhalb eines Zylinders (2) angeordnet ist,
- eine Kolbenstange (4),
- einen ersten Fluidkanal (3.1), der eine Kolbenoberseite und eine Kolbenunterseite fluidisch miteinander verbindet, sowie
- einen zweiten Fluidkanal (8.1, 3.1, 8.1'), der mit dem ersten Fluidkanal (3.1) die Kolbenoberseite und die Kolbenunterseite fluidisch miteinander verbindet,
wobei die Kolbenstange (4) mit dem Kolben (3) verbunden ist,
**dadurch gekennzeichnet, dass**
der zweite Fluidkanal (8.1, 3.1, 8.1') durch mindestens ein Federelement (8, 8') gebildet wird, welches an dem Kolben angeordnet ist und welches im Bereich des ersten Fluidkanals (3.1) mindestens eine Öffnung (8.1, 8.1') aufweist, die im Durchmesser kleiner ist, als der Durchmesser des ersten Fluidkanals (3.1).

2. Möbel mit einer höhenverstellbaren Möbelsäule mit einer Bremsvorrichtung gemäß Anspruch 1.

3. Möbel, gemäß Anspruch 2, wobei
die Höhenverstellung durch mindestens eine Gasdruckfeder erfolgt, wobei die mindestens eine Gasdruckfeder über einen Gasspeicher einstellbar ist.

4. Verwendung einer Bremsvorrichtung gemäß Anspruch 1 in einem höhenverstellbaren Möbel.

5. Verfahren zum Drosseln einer Maximalgeschwindigkeit einer Höhenverstellung eines Möbels gemäß Anspruch 2 mit der nach Anspruch 1 ausgebildeten Bremsvorrichtung, wobei das Verfahren die Schritte aufweist:
- Übertragen einer Krafteinwirkung auf einen bewegbaren Anteil des Möbels auf die Kolbenstange (4) und den Kolben (3),
- Verstellung der Kolbenstange (4) und des Kolbens (3), - Bilden eines Überdrucks auf der der Krafteinwirkung abgewandten Seite des Kolbens (3),
- Andrücken des Federelements (8, 8') zum Kolben (3) hin,
- Verengung des Durchmessers des ersten Fluidkanals (3.1) auf den Durchmesser des zweiten Fluidkanals (8.1, 8.1') und
- Drosselung der Verstellgeschwindigkeit der höhenverstellbaren Möbelsäule.

## Claims

1. A braking device for a height-adjustable furniture column, whereby the braking device comprises:
- a piston (3) arranged within a cylinder (2),
- a piston rod (4),
- a first fluid channel (3.1), which fluidically connects a piston upper side and a piston lower side, and
- a second fluid channel (8.1, 3. 1, 8.1'), which fluidically connects the piston upper side and the piston lower side with the first fluid channel (3.1),
wherein the piston rod (4) is connected to the piston (3),
**characterized in that** the second fluid channel (8.1, 3.1, 8.1') is formed by at least one spring element (8, 8'), which is arranged on the piston and which has at least one opening (8.1, 8.1') in a region of the first fluid channel (3.1), which opening is smaller in diameter than the diameter of the first fluid channel (3.1).

2. A furniture with a height-adjustable furniture column comprising a braking device according to claim 1.

3. A furniture according to claim 2, wherein
the height is adjustable by at least one gas pressure spring, wherein the at least one gas pressure spring is adjustable by means of a gas reservoir.

4. Use of a braking device according to claim 1 in a height-adjustable furniture.

5. Method for throttling a maximum speed of a height adjustment of a furniture according to claim 2 using the braking device according to claim 1, wherein
the method comprises the steps:
- transferring a force impact on a movable part of the furniture to the piston rod (4) and the piston (3),
- adjustment of the piston rod (4) and the piston (3),
- formation of an overpressure on the side of the piston (3) facing away from the force impact,
- pressing of the spring element (8, 8') towards the piston (3),
- narrowing of the diameter of the first fluid passage (3.1) towards the diameter of the second fluid channel (8.1, 8.1') and
- throttling of the adjustment speed of the height-adjustable furniture column.

## Revendications

1. Dispositif de freinage pour une colonne de meuble ajustable en hauteur, dans lequel le dispositif de freinage présente :
- un piston (3), qui est disposé à l'intérieur d'un cylindre (2),
- une tige de piston (4),
- un premier canal de fluide (3.1), qui relie l'un à l'autre de manière fluidique un côté supérieur de piston et un côté inférieur de piston, ainsi
- qu'un deuxième canal de fluide (8.1, 3.1, 8.1'), qui relie l'un à l'autre de manière fluidique avec le premier canal de fluide (3.1) le côté supérieur de piston et le côté inférieur de piston,
dans lequel la tige de piston (4) est reliée au piston (3),
**caractérisé en ce que**
le deuxième canal de fluide (8.1, 3.1, 8.1') est formé par au moins un élément de ressort (8, 8'), qui est disposé au niveau du piston et qui présente, dans la zone du premier canal de fluide (3.1), au moins une ouverture (8.1, 8.1'), dont le diamètre est inférieur au diamètre du premier canal de fluide (3.1).

2. Meuble avec une colonne de meuble ajustable en hauteur avec un dispositif de freinage selon la revendication 1.

3. Meuble selon la revendication 2, dans lequel
l'ajustage en hauteur est effectué par au moins un ressort pneumatique, dans lequel l'au moins un ressort pneumatique peut être réglé par l'intermédiaire d'un accumulateur de gaz.

4. Utilisation d'un dispositif de freinage selon la revendication 1 dans un meuble ajustable en hauteur.

5. Procédé servant à réduire une vitesse maximale d'un ajustement en hauteur d'un meuble selon la revendication 2 avec le dispositif de freinage réalisé selon la revendication 1, dans lequel le procédé présente les étapes :
- de transmission d'une force appliquée sur une partie mobile du meuble sur la tige de piston (4) et le piston (3),
- d'ajustement de la tige de piston (4) et du piston (3),
- de formation d'une surpression sur le côté, opposé à l'application de force, du piston (3),
- de compression de l'élément de ressort (8, 8') en direction du piston (3),
- de rétrécissement du diamètre du premier canal de fluide (3.1) sur le diamètre du deuxième canal de fluide (8.1, 8.1'), et
- de réduction de la vitesse d'ajustement de la colonne de meuble ajustable en hauteur.
